# EUROPEAN PATENT APPLICATION

(11) **EP 2 626 636 A2**
(43) Date of publication of application: **14.08.2013**
(21) Application number: 13154689.7
(22) Date of filing: 08.02.2013
(51) Int. Cl.: F23R 3/28, F02C 7/22

(54) **Fuel nozzle end cover, fuel nozzle, and process of fabricating a fuel nozzle end cover**

(30) Priority: 09.02.2012 US 201213369537
(71) Applicant: General Electric Company, Schenectady, New York 12345 (US)
(72) Inventor: Johnston, Bill Damon, Greenville, SC South Carolina 29615 (US); Nowak, Daniel Anthony, Houston, TX Texas 77086 (US); Kottilingham, Srikanth Chandrudu, Greenville, SC South Carolina 29615 (US); Monga, Amit, 560066 Bangalore, Karnataka (IN); Tollison, Brian Lee, Greenville, SC South Carolina 29615 (US); Obeirne, John Gregory, Greenville, SC South Carolina 29615 (US)
(74) Representative: Cleary, Fidelma

(57) **Abstract**

Disclosed is a fuel nozzle end cover (104), a fuel nozzle (100) and a process of fabricating a fuel nozzle end cover (104). The fuel nozzle end cover (104) includes a base material (106) and one or more features (108) extending from the base material (106) into a cavity (110) of the fuel nozzle end cover (104). The one or more features (108) are secured to the base material (106) by a process selected from the group consisting of beam welding, friction welding, gas tungsten arc welding, gas metal arc welding, and combinations thereof. The fuel nozzle (100) includes a fuel nozzle insert (102) and a fuel nozzle end cover (104). The process of fabricating the fuel nozzle end cover (104) includes providing a base material (106) and securing one or more features (108) to the base material (106) by a welding process selected from the group consisting of beam welding, friction welding, gas tungsten arc welding, gas metal arc welding, and combinations thereof.

## Description

### FIELD OF THE INVENTION

The present invention is directed to fuel nozzles and processes of fabricating components of fuel nozzles. Most specifically, the present invention is directed to fuel nozzle end covers and processes of fabricating fuel nozzle end covers.

### BACKGROUND OF THE INVENTION

In general, gas turbines are being subjected to more demanding operation. Higher temperatures, harsher environments, use in more diverse environments, and extended duration of use result in challenges for gas turbines and their components. Extending the useful life of such components and improving capability for repair of such components can decrease costs associated with the gas turbines and can increase the operational aspects of the gas turbines.

Known end covers on fuel nozzles in gas turbines have an insert brazed into the end cover. Generally, such inserts have four braze joints securing the inserts within the end cover. These braze joints are subject to failure, for example, resulting in leaking proximal to the braze joints. Such braze joints can also suffer from a drawback of requiring frequent repair. Such repairs can be complex and expensive. In addition, the ability to perform such repairs may be limited.

Repair of known end covers can result in further leaking that is not capable of being repaired. For example, when an insert is removed for repair, the braze joints are severed. Repeated severing of the braze joints can result in undesirable operational concerns, such as leaking, that is not capable of being adequately repaired. Known end covers suffer from a drawback of being limited to three such iterations of repeated repair.

A fuel nozzle, a fuel nozzle end cover, and a process of fabricating a fuel nozzle end cover that do not suffer from one or more of the above drawbacks would be desirable in the art.

### BRIEF DESCRIPTION OF THE INVENTION

In a first aspect, the invention resides in a fuel nozzle end cover including a base material and one or more features extending from the base material into a cavity of the fuel nozzle end cover. The one or more features are secured to the base material by a process selected from the group consisting of beam welding, friction welding, gas tungsten arc welding, gas metal arc welding, and combinations thereof.

In another aspect, the invention resides in a fuel nozzle including a fuel nozzle insert and the fuel nozzle end cover as described above. The fuel nozzle end cover corresponds to the fuel nozzle insert and includes a base material and one or more features extending from the base material into a cavity of the fuel nozzle end cover. The one or more features are secured to the base material by a process selected from the group consisting of beam welding, friction welding, gas tungsten arc welding, gas metal arc welding, and combinations thereof.

In another aspect, the invention resides in a process of fabricating a fuel nozzle end cover includes providing a base material and securing one or more features to the base material by a welding process selected from the group consisting of beam welding, friction welding, gas tungsten arc welding, gas metal arc welding, and combinations thereof.

Other features and advantages of the present invention will be apparent from the following more detailed description of the preferred embodiment, taken in conjunction with the accompanying drawings which illustrate, by way of example, the principles of the invention.

### BRIEF DESCRIPTION OF THE DRAWINGS

Embodiments of the present invention will now be described, by way of example only, with reference to the accompanying drawings in which:
FIG. 1 is a schematic view of an exemplary fuel nozzle having a fuel nozzle end cover and a fuel nozzle insert with the fuel nozzle insert shown in a removed position according to an embodiment of the disclosure.
FIG. 2 is a schematic view of an exemplary fuel nozzle end cover having one or more features extending into a cavity of a fuel nozzle end cover according to an embodiment of the disclosure.

Wherever possible, the same reference numbers will be used throughout the drawings to represent the same parts.

### DETAILED DESCRIPTION OF THE INVENTION

Provided is an exemplary fuel nozzle, a fuel nozzle end cover, and a process of fabricating a fuel nozzle end cover that do not suffer from one or more of the above drawbacks. Embodiments of the present disclosure permit fuel nozzles to be used for longer periods of time, permit fuel nozzles to be repaired in a simpler manner, permit fuel nozzles to be repaired more times (for example, more than three times), decrease operational costs of repair, prevent leaks in fuel nozzles, and combinations thereof.

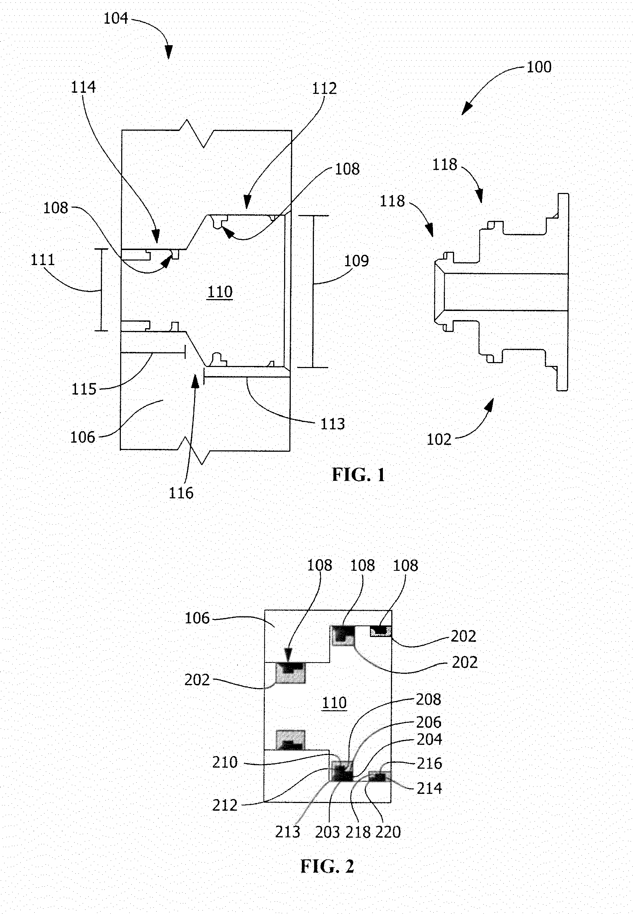

FIG. 1 shows a section view of an exemplary fuel nozzle 100. The fuel nozzle 100 includes a fuel nozzle insert 102 and a fuel nozzle end cover 104 shown in a removed position. The fuel nozzle insert 102 is capable of being removably secured within the fuel nozzle end cover 104. The fuel nozzle 100 can be a portion of any suitable system (not shown). In one embodiment, the fuel nozzle 100 is a portion of a gas turbine system.

The fuel nozzle end cover 104 includes a base material 106 and one or more features 108 extending from the base material 106 into a cavity 110 formed by the fuel nozzle end cover 104. The base material 106 is any suitable metal or metallic composition. In one embodiment, the base material 106 is or includes stainless steel.

In one embodiment, the cavity 110 includes substantially cylindrical portions forming (for example, by boring) the base material 106. For example, in one embodiment, a first cylindrical portion 112 is separated from a second cylindrical portion 114 by one or more of the features 108. In this embodiment, the first cylindrical portion 112 has a first diameter 109 (for example, about 4 inches) that is larger than a second diameter 111 (for example, about 2.3 inches) of the second cylindrical portion 114, the first diameter 109 differing from the second diameter 111. In one embodiment, the first cylindrical portion 112 has a first depth 113 (for example, about 1.4 inches) and the second cylindrical portion 114 has a second depth 115 (for example, about 2.3 inches), the first depth differing from the second depth. In a further embodiment, a frustoconical portion 116 separated from the first cylindrical portion 112 and the second cylindrical portion 114 by the features 108 is included.

The features 108 are arranged and disposed to facilitate removable securing of the fuel nozzle insert 102 to the fuel nozzle end cover 104 in the cavity 110. For example, the features 108 extend into the cavity 110 forming concentric rings corresponding to protrusions 118 on the fuel nozzle insert 102. The protrusions 118 each have a geometry corresponding to the geometry of the features 108, thereby permitting a tight-fitting of the fuel nozzle insert 102 within the fuel nozzle end cover 104. In one embodiment, the protrusions 118 and the features 108 secure the fuel nozzle insert 102 within the fuel nozzle end cover 104. In another embodiment, the protrusions 118 and the features 108 are secured to one another by welding, such as, beam welding (laser and/or electron beam), friction welding, gas tungsten arc welding, gas metal arc welding, or combinations thereof.

The features 108 are positioned in any suitable arrangement. For example, in one embodiment, a plurality of the features 108 is positioned within each of the first cylindrical portion 112 and the second cylindrical portion 114. In other embodiments, only one of the features 108 is positioned in each of the first cylindrical portion 112 and the second cylindrical portion 114. Additionally or alternatively, in one embodiment, one or more of the features 108 extend circumferentially around the cavity 110 through the first cylindrical portion 112 and/or the second cylindrical portion 114. In another embodiment, one or more of the features 108 are discontinuously circumferential within the cavity 110.

Referring to FIG. 2, in one embodiment, the features 108 are machined from a simple geometry 202 (for example, a substantially cuboid geometry) to any suitable predetermined geometry. In one embodiment, at least one of the features 108 has a stepped geometry. In a further embodiment, at least one of the features 108 includes a first surface 203 extending abutting the base material 106 when secured, a second surface 204 extending in a direction substantially perpendicular to the first surface 203 (for example, away from the fuel nozzle end cover 104), a third surface 206 extending in a direction substantially perpendicular to the second surface 204 (for example, parallel to the first surface 203), a fourth surface 208 extending in a direction substantially perpendicular to the third surface 206 (for example, toward the cavity 110), a fifth surface 210 extending in a direction substantially perpendicular to the fourth surface 208 (for example, parallel to the first surface 203), a sixth surface 212 extending in a direction substantially perpendicular to the fifth surface 210 when secured (for example, in a direction toward the base material 106), and a seventh surface 213 extending from the fourth surface 212 to the base material 106 when secured (for example, at an angle other than ninety degrees). In one embodiment, at least one of the features 108 includes a geometry that is not stepped. For example, in a further embodiment, at least one of the features 108 includes a first substantially planar surface 214 extending from the base material 106, a second substantially planar surface 216 extending from the first substantially planar surface 214, and a third substantially planar surface 218 extending from the second substantially planar surface 216. The first substantially planar surface 214, the second substantially planar surface 216, and the third substantially planar surface 218 form a substantially cuboid geometry with a sloping portion 220 extending from the third substantially planar surface 218 to the base material 106.

The features 108 are secured to the base material 106 by any suitable process. The securing of the features 108 to the base material 106 results in a predetermined microstructure (not shown) based upon the welding process utilized. The securing is performed by one or more of beam welding (such as laser and/or electron beam), friction welding, gas tungsten arc welding (such as tungsten inert gas welding), and gas metal arc welding (such as metal inert gas welding). In one embodiment, such as in embodiments with the securing being by beam welding, or friction welding, the predetermined microstructure includes a first heat affected zone proximal to the base material 106 that has a predetermined microstructure, a second heat affected zone between the first heat affected zone and a fusion zone, the fusion zone between the second heat affected zone and a third heat affected zone, the third heat affected zone between the fusion zone and a fourth heat affected zone, and the fourth heat affected zone between the third heat affected zone and the unaffected portions of the feature 108. In one embodiment, each of the zones has a different microstructure. As will be appreciated by those skilled in the art, other embodiments include characteristics distinguishing from techniques using brazing.

In one embodiment, securing of the features 108 to the base material 106 permits repeated insertion and removal of the insert 102 into the fuel nozzle end cover 104. For example, in one embodiment, the insert 102 is capable of being removed from the fuel nozzle end cover 104 with little or no damage to the fuel nozzle 100 at least a predetermined number of times, for example, more than three times, more than four times, more than five times, more than ten times, or more than any other suitable number of times.

The features 108 are any suitable material. In one embodiment, one or more of the features 108 have a different composition than the base material 106. In one embodiment, the material of the features 108 includes an equal or greater ductility in comparison to materials used for brazing and/or than the base material 106 would have when secured by welding, such as, beam welding (such as laser and/or electron beam), friction welding, (such as tungsten inert gas welding), and/or gas metal arc welding (such as metal inert gas welding).

In one embodiment, at least one of the features 108 includes a composition, by weight, of about 10% Ni, about 20% Cr, about 15% W, up to about 3% Fe, about 1.5% Mn, up to about 0.4% Si, about 0.10% C, incidental impurities, and balance Co. In one embodiment, at least one of the features 108 includes a composition, by weight, of about 0.005% C, 0.150% Mn, about 0.005% P, about 0.002% S, about 0.03% Si, about 15.50% Cr, about 16.0% Mo, about 3.50% W, about 0.15% V, about 0.10% Co, about 6.00% Fe, incidental impurities, and balance Ni. In one embodiment, at least one of the features 108 includes a composition, by weight, of about 0.015% C, about 0.48% Si, about 20% Cr, about 1.85% Mn, about 0.15% P, up to about 0.20% Cu, about 0.10% S, up to about 0.60% N, up to about 0.50% Mo, about 10.1% Ni, incidental impurities, and balance Fe.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A fuel nozzle end cover (104), comprising:
a base material (106); and
one or more features (108) extending from the base material (106) into a cavity (110) of the fuel nozzle end cover (104);
wherein the one or more features (108) are secured to the base material (106) by a process selected from the group consisting of beam welding, friction welding, gas tungsten arc welding, gas metal arc welding, and combinations thereof.

2. The fuel nozzle end cover of claim 1, wherein the one or more features (108) are machined to a predetermined geometry.

3. The fuel nozzle end cover of claim 1 or 2, wherein the one or more features (108) one of are tungsten inert gas welded electron beam welded to the base material (106).

4. The fuel nozzle end cover of any of claims 1 to 3, wherein the one or more features (108) have a different composition than the base material (106).

5. The fuel nozzle end cover of any one of claims 1 to 4, wherein the one or more features (108) have a different ductility than the base material (106).

6. The fuel nozzle end cover of any of preceding claim, wherein at least one of the one or more features has a stepped geometry or a geometry that is not stepped.

7. The fuel nozzle end cover of any of claims 1 to 6, wherein at least one of the one or more features (108) includes a first surface (203) extending from the base material (106), a second surface (204) extending in a direction substantially perpendicular to the first surface (203), a third surface (206) extending in a direction substantially perpendicular to the second surface (204), a fourth surface (208) extending in a direction substantially perpendicular to the third surface (205), and a fifth surface (210) extending in a direction substantially perpendicular to the fourth surface (208).

8. The fuel nozzle end cover of any of claims 1 to 7, wherein at least one of the one or more features (108) has a composition, by weight, of about 10% Ni, about 20% Cr, about 15% W, up to about 3% Fe, about 1.5% Mn, up to about 0.4% Si, about 0.10% C, incidental impurities, and balance Co.

9. The fuel nozzle end cover of any of claims 1 to 7, wherein at least one of the one or more features (108) has a composition, by weight, of about 0.005% C, 0.150% Mn, about 0.005% P, about 0.002% S, about 0.03% Si, about 15.50% Cr, about 16.0% Mo, about 3.50% W, about 0.15% V, about 0.10% Co, about 6.00% Fe, incidental impurities, and balance Ni.

10. The fuel nozzle end cover of any of claims 1 to 7, wherein at least one of the one or more features (108) has a composition, by weight, of about 0.015% C, about 0.48% Si, about 20% Cr, about 1.85% Mn, about 0.15% P, up to about 0.20% Cu, about 0.10% S, up to about 0.60% N, up to about 0.50% Mo, about 10.1% Ni, incidental impurities, and balance Fe.

11. The fuel nozzle end cover of any preceding claim, wherein the one or more features (108) removably secure an insert (102) to the end cover (104).

12. The fuel nozzle end cover of any preceding claim, wherein the base material (106) is stainless steel.

13. A fuel nozzle, comprising:
a fuel nozzle insert (102); and
a fuel nozzle end cover (104) corresponding to the fuel nozzle insert (102),
the fuel nozzle end cover as recited in any of claims 1 to 12.

14. A process of fabricating a fuel nozzle end cover (104), the process comprising:
providing a base material (106) of the fuel nozzle end cover (104); and
securing one or more features (108) to the base material (106) by a welding process selected from the group consisting of beam welding, friction welding, gas tungsten arc welding, gas metal arc welding, and combinations thereof.

15. The process of claim 14, further comprising machining at least one of the one or more features (108) to a predetermined geometry.

16. The process of claim 14 or 15, wherein the securing is by electron beam welding one of tungsten inert gas welding.
